# EUROPEAN PATENT SPECIFICATION

(11) **EP 3 754 998 B1**
(45) Date of publication and mention of the grant of the patent: **15.12.2021**
(21) Application number: 19912199.7
(22) Date of filing: 06.06.2019
(51) Int. Cl.: H04N 21/442, H04N 21/433, H04N 21/24, H04N 17/00, H04N 21/647, H04N 21/61, H04N 21/643, H04N 21/6543, H04N 21/6547, H04N 21/658, H04L 12/26, H04L 29/06

(54) **STREAMING MEDIA QUALITY MONITORING METHOD AND SYSTEM**
VERFAHREN UND SYSTEM ZUR ÜBERWACHUNG DER QUALITÄT VON STREAMING-MEDIEN
PROCÉDÉ ET SYSTÈME DE SURVEILLANCE DE LA QUALITÉ DE MÉDIAS EN STREAMING

(30) Priority: 07.05.2019 CN 201910374863
(43) Date of publication of application: 23.12.2020
(73) Proprietor: Wangsu Science & Technology Co., Ltd., Shanghai 200030 (CN)
(72) Inventor: LIU, Yanhong, Shangai 200030 (CN); WEI, Rongqiang, Shangai 200030 (CN)
(74) Representative: Vigand, Philippe
(86) International application number: PCT/CN2019/090343
(87) International publication number: WO 2020/224025

(56) References cited:
- CN-A- 101 247 286
- CN-A- 101 247 286
- CN-A- 101 499 918
- CN-A- 105 872 611
- CN-A- 108 737 812
- CN-B- 101 291 260
- CN-B- 101 291 260
- US-A1- 2013 019 023
- US-B1- 8 782 727

## Description

### TECHNICAL FIELD

The present disclosure relates to streaming media technologies, and in particular, to a method and a system for monitoring quality of streaming media.

### BACKGROUND

Streaming media refers to a technology and a process in which a series of media data is compressed and segmented, and the segmented data is sent via a network. Thus a video and audio are instantly transmitted via the network for viewing. Streaming media services, for example, live broadcasting service and video-on-demand service, are becoming more and more popular, and quality of the streaming media services can significantly affect experience of a terminal user.

US2013/0019023A1 discloses a system and a method for stream client emulators in related art.

Generally, operation and maintenance personnel may find that there is a quality problem in the streaming media services only after the terminal user feeds back the problem.

### SUMMARY

To resolve a problem in existing technologies, embodiments of the present disclosure provide a method and a system for monitoring quality of streaming media. The technical solutions are as follows.

A first aspect provides a method for monitoring quality of streaming media as claimed in claim 1.

Optionally, the step of simulating, by a terminal player, playing a streaming media resource periodically includes:
sending, by the monitoring server, task information to the terminal player, where the task information includes a network address, a play duration, a buffer size, and a play period of the streaming media resource; and
simulating, by the terminal player, playing the streaming media resource periodically after receiving the task information; wherein the streaming media is played successfully refers to that the streaming media resource is played for the play duration specified by the task information.

Optionally, the step of simulating, by the terminal player, playing a streaming media resource periodically includes:
sending, by the terminal player according to the play period, request information of obtaining the streaming media resource, where the request information includes the network address of the streaming media resource;
buffering, by the terminal player after receiving the streaming media resource, the streaming media resource based on the buffer size in the task information, and playing the streaming media resource; and
ending playing when a duration in which the terminal player plays the streaming media resource reaches the play duration in the task information.

Optionally, before the step of sending, by the monitoring server, task information to the terminal player, the method includes:
configuring, by the monitoring server, monitoring information, where the monitoring information includes the task information, an operating system of a terminal player, and a region of the terminal player;
receiving, by the monitoring server, an operating system of the terminal player and a region of the terminal player that are sent by the terminal player which plays the streaming media resource; and
associating the terminal player which plays the streaming media resource with the task information if the terminal player which plays the streaming media resource has the same operating system and the same region with that of the terminal player in the monitoring information.

Optionally, after the step of associating, by the monitoring server, the terminal player which plays the streaming media resource with the task information, the method includes:
sending, by the terminal player, task request information to the monitoring server; and
sending, by the monitoring server, the task information associated with the terminal player to the terminal player after receiving the task request information.

Optionally, the step of determining, by the monitoring server, the current quality of streaming media based on the indicator data includes:
computing, by the monitoring server, a first reference value based on the indicator data, where the first reference value is equal to a ratio of a quantity of playing the streaming media resource by the terminal player successfully in a preset period and a total quantity of playing the streaming media resource by the terminal player in the preset period; and
determining that the current quality of streaming media does not meet a requirement if the first reference value is less than a first preset value.

Optionally, the step of determining, by the monitoring server, the current quality of streaming media based on the indicator data further includes:
computing a second reference value based on the indicator data if the first reference value is greater than or equal to the first preset value, where the second reference value is equal to a ratio of a quantity of playing the streaming media resource by the terminal player normally in the preset period and the total quantity of playing the streaming media resource by the terminal player in the preset period; and
determining that the current quality of streaming media meets the requirement if the second reference value is greater than a second preset value,; otherwise, determining that the current quality of streaming media does not meet the requirement.

Optionally, after the step of determining, by the monitoring server, that the current quality of streaming media does not meet the requirement, the method includes:
generating, by the monitoring server, alarm information, and sending the alarm information via email, short message service, or WeChat.

Optionally, after the step of receiving, by the monitoring server, the indicator data, the method further includes:
drawing a time distribution diagram of the key indicator data in a sequence of generating key indicator data, where the key indicator data includes one or more of the following: a DNS resolution time, a connection time, an initial packet time, an initial buffer time, an initial continuous play time, a buffer time after each stucking, and a continuous play time after each stucking.

Optionally, after the step of receiving, by the monitoring server, the indicator data, the method further includes:
drawing a curve graph of a preparation time before an initial buffer based on the indicator data; or
drawing a curve graph of a sum of a preparation time before an initial buffer and a total buffer time based on the indicator data.

A second aspect provides a system for monitoring quality of streaming media. The system includes a terminal player and a monitoring server;
the terminal player is configured to: simulate playing a streaming media resource in a fixed period, record indicator data for simulating playing the streaming media resource, and send the indicator data to the monitoring server; and
the monitoring server is configured to: receive the indicator data, and determine current quality of streaming media based on the indicator data.

Optionally, the monitoring server is configured to send task information to the terminal player, where the task information includes a network address, a play duration, a buffer size, and a play period of the streaming media resource; and
the terminal player is configured to simulate playing the streaming media resource in the fixed period after receiving the task information.

Optionally, the terminal player is configured to:
send, according to the play period, request information of obtaining the streaming media resource, where the request information includes the network address of the streaming media resource;
buffer, after receiving the streaming media resource, the streaming media resource based on the buffer size in the task information, and play the streaming media resource; and
end playing when a duration in which the terminal player plays the streaming media resource reaches the play duration in the task information.

Optionally, the monitoring server is configured to:
configure monitoring information, where the monitoring information includes the task information, an operating system of the terminal player, and a region of the terminal player;
receive an operating system of the terminal player and a region of the terminal player that are sent by the terminal player which plays the streaming media resource; and
associate the terminal player which plays the streaming media resource with the task information if the terminal player which plays the streaming media resource has the same operating system and the same region with that of the terminal player in the monitoring information.

Optionally, the terminal player is configured to send task request information to the monitoring server; and
the monitoring server is configured to send task information associated with the terminal player to the terminal player after receiving the task request information.

Optionally, the terminal player further sends an IP address of a streaming media server and an IP address of a DNS server while sending the indicator data to the monitoring server.

Optionally, the monitoring server is configured to:
compute a first reference value based on the indicator data, where the first reference value is equal to a ratio of a quantity of playing the streaming media resource by the terminal player successfully in a preset period and a total quantity of playing the streaming media resource by the terminal player in the preset period; and
determine that the current quality of streaming media does not meet a requirement if the first reference value is less than a first preset value.

Optionally, the monitoring server is configured to:
compute a second reference value based on the indicator data if the first reference value is greater than or equal to the first preset value, where the second reference value is equal to a ratio of a quantity of playing the streaming media resource by the terminal player normally in the preset period and the total quantity of playing the streaming media resource by the terminal player in the preset period; and
determine that the current quality of streaming media meets the requirement if the second reference value is greater than a second preset value; otherwise, determine that the current quality of streaming media does not meet the requirement.

Optionally, the monitoring server is further configured to generate alarm information after determining that the current quality of streaming media does not meet the requirement, and send the alarm information via email, short message service, or WeChat.

Optionally, the monitoring server is configured to:
draw a time distribution diagram of the key indicator data in a sequence of generating key indicator data, where the key indicator data includes one or more of the following: a DNS resolution time, a connection time, an initial packet time, an initial buffer time, an initial continuous play time, a buffer time after each stucking, and a continuous play time after each stucking.

Optionally, the monitoring server is configured to:
draw a curve graph of a preparation time before an initial buffer based on the indicator data; or
draw a curve graph of a sum of a preparation time before an initial buffer and a total buffer time based on the indicator data.

A third aspect provides a terminal. The terminal includes:
at least one processor; and
a memory connected and communicated with the at least one processor, configured to store instructions executable by the at least one processor, where
the instructions are executed by the at least one processor to cause the at least one processor to perform a processing process performed by the terminal player in the method for monitoring quality of streaming media according to the first aspect.

A fourth aspect provides a computer readable storage medium that stores computer programs, where when executed by a processor, the computer programs implement the processing process performed by the terminal player in the method for monitoring quality of streaming media according to the first aspect.

The terminal player in the embodiments of the present disclosure may simulate a process that a client plays a streaming media resource, and a quality problem of streaming media services may be found in advance before a customer discovers anomalies such as a stucking and is fed back to a video source provider and a content delivery network (CDN) server in time, to be resolved timely. In addition, the terminal player may record various pieces of indicator data in the process of playing the streaming media resource, and report to the monitoring server, and the monitoring server can uniformly deal with the indicator data reported by each terminal player and analyze reasons for poor quality of streaming media, thus the efficiency of operation and maintenance could be improved.

### BRIEF DESCRIPTION OF THE DRAWINGS

To describe technical solutions of embodiments of the present disclosure more clearly, accompanying drawings required for describing the embodiments are described below briefly. Apparently, the accompanying drawings in the following descriptions merely show some embodiments of the present disclosure, and a person of ordinary skill in the art can obtain other drawings according to the accompanying drawings without creative efforts.
Fig. 1 is a schematic diagram of a network framework according to an embodiment of the present disclosure;
Fig. 2 is a flowchart of a method for monitoring quality of streaming media according to an embodiment of the present disclosure; and
Fig. 3 is a structural block diagram of a terminal according to an embodiment of the present disclosure.

### DETAILED DESCRIPTION

A conventional method for monitoring quality of streaming media has the following disadvantages.

There is an obvious time delay in a manner in which a quality problem of streaming media services is fed back by a terminal user, and normal services cannot be resumed in time because the problem is not detected in time, affecting user experience. In addition, after the problem of streaming media service quality is detected, operation and maintenance personnel generally need to search a terminal log and locate the problem. However, the terminal log is complex and diverse, and is not conducive to unified processing. Consequently, it is difficult to investigate the problem.

To make objectives, technical solutions, and advantages of the present disclosure clearer, the following further describes embodiments of the present disclosure in detail with reference to accompanying drawings.

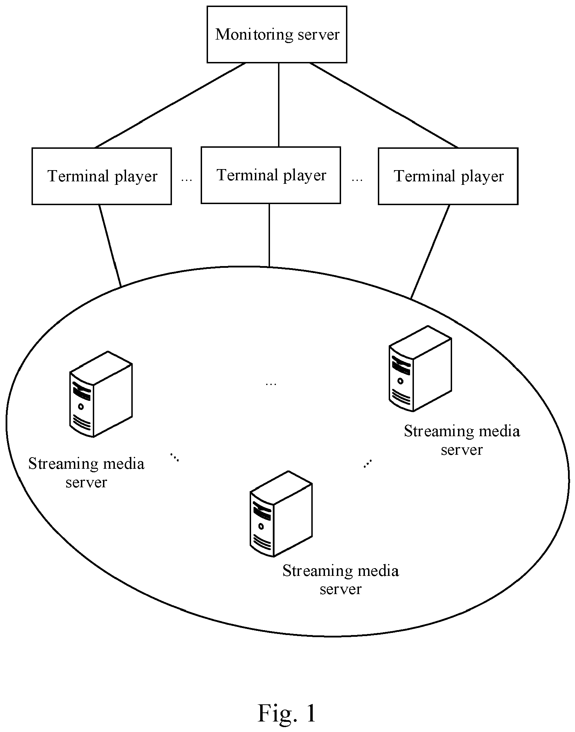

An embodiment of the present disclosure provides a method for monitoring quality of streaming media. The method may be applied to a network framework shown in Fig. 1. The network framework includes a terminal player, a streaming media server, and a monitoring server. The streaming media server may be a CDN server and is configured to store a streaming media resource. The terminal player simulates, in a fixed period, a client playing the streaming media resource, that is, obtains the streaming media resource from the streaming media and plays the streaming media resource, and records indicator data for simulating playing the streaming media resource, for example, a status code, a DNS resolution time, a connection time, an initial packet time, an initial buffer time, an initial continuous play time, a buffer time after each stucking, and a continuous play time after each stucking. The terminal player sends the indicator data to the monitoring server, and the monitoring server receives the indicator data, and determines current quality of streaming media based on the indicator data.

The terminal player and the monitoring server may each include a processor, a memory, and a transceiver. The processor may be configured to perform the following process of monitoring quality of streaming media. The memory may be configured to store data needed and generated in the following processing process. The transceiver may be configured to receive and send relevant data in the following processing process.

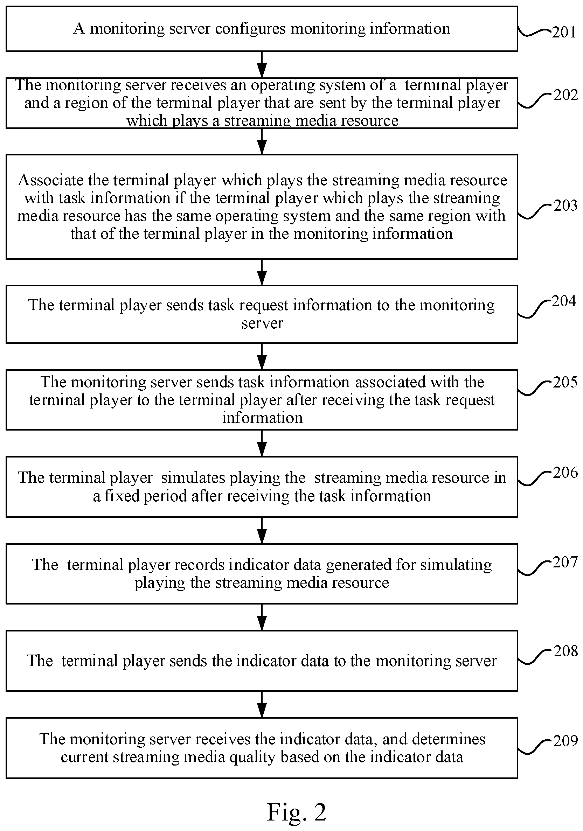

The following describes a processing process shown in Fig. 2 in detail with reference to specific embodiments, and content may be as follows.

At step 201, a monitoring server configures monitoring information. Herein, the monitoring information includes task information, an operating system of a terminal player, and a region of the terminal player.

In this embodiment of the present disclosure, the monitoring server is configured to centrally manage terminal players in each regions. The monitoring server may preconfigure the monitoring information, and each piece of monitoring information includes task information, an operating system of a terminal player, and a region of the terminal player. The task information includes a network address, a play duration, a buffer size, and a play period of a streaming media resource to be played. The network address of the streaming media resource is represented by a uniform resource locator (URL).

At step 202, the monitoring server receives an operating system of a terminal player and a region of the terminal player that are sent by the terminal player which plays the streaming media resource.

During implementation, the terminal player which plays the streaming media resource reports a heartbeat to the monitoring server through a Hypertext Transfer Protocol (HTTP) interface, and reports terminal information such as an IP address, an operating system of the terminal player and a region of the terminal player; and the monitoring server stores the collected terminal information into a database.

At step 203, the terminal player is associated with the task information if the operating system of the terminal player which plays the streaming media resource is the same as an operating system of a terminal player in the monitoring information, and the region of the terminal player which plays the streaming media resource is the same as the terminal player in the monitoring information.

During implementation, there may be a plurality of terminal players that sends the terminal information to the monitoring server, and the monitoring server searches, based on the preconfigured monitoring information, the terminal information matching the task information, thereby matching a suitable terminal player which plays the streaming media resource with the task information, that is, the terminal player has the same operating system and the same region with that of the terminal player in the monitoring information.

The monitoring server may preload the task information matching the terminal player into a memory in a j son format.

At step 204, the terminal player sends task request information to the monitoring server.

During implementation, the terminal player may periodically send the task request information to the monitoring server through the HTTP interface.

At step 205, the monitoring server sends task information associated with the terminal player to the terminal player after receiving the task request information.

Optionally, the monitoring server may also periodically send corresponding task information to the terminal player.

At step 206, the terminal player simulates playing a streaming media resource in the fixed period after receiving the task information.

The task information includes a network address, a play duration, a buffer size, and a play period of the streaming media resource to be played. A process in which the terminal player executes, based on an instruction in the task information, a task of simulating playing the streaming media resource is as follows. The terminal player sends, according to the play period, request information of obtaining the streaming media resource, where the request information includes a URL of the streaming media resource, that is, a network address. A DNS server receives the request information, and performs domain name resolution on a domain name in the URL to obtain an IP address of the streaming media server corresponding to the domain name. The DNS server sends the IP address obtained through resolution to the terminal player. The terminal player sends, to the streaming media server with the IP address after receiving the IP address, the request information of obtaining the streaming media resource, and if there is a streaming media resource to be played cached in the streaming media server, the streaming media resource is sent to the terminal player. The terminal player receives the streaming media resource, buffers the streaming media resource based on the buffer size in the task information, and plays the streaming media resource. Playing is ended when a duration in which the terminal player plays the streaming media resource reaches the play duration in the task information.

In a process of playing the streaming media resource, the terminal player decodes the data packet and parses an audio-video time stamp after obtaining a streaming media data packet, and when the time stamp reaches a specified play duration in the task information, ends the play task.

It should be noted that, a process in which the terminal player executes a task of simulating playing the streaming media resource is the same as or similar to a process in which a general client performs playing the streaming media resource, and other specific processing processes are not described herein.

During implementation, the terminal player parses the task information after receiving the task information, generates a task configuration file, and stores the task configuration file in a specified directory. When a moment of playing the streaming media resource is reached, the task configuration file is accessed, and the task of simulating playing the streaming media resource is executed based on an instruction in the task configuration file.

At step 207, the terminal player records the indicator data for simulating playing the streaming media resource.

The indicator data refers to data that may reflect or be used to compute quality of streaming media service. In above mentioned process, when the terminal player executes the task of simulating playing the streaming media resource, and a processing rate of each step affects fluency of an entire process of playing the streaming media resource, so that the indicator data in the processing of each step needs to be recorded. After determining that there is a problem in current quality of streaming media based on the indicator data, the monitoring server may further determine, based on the indicator data, specific reasons for poor quality of streaming media.

The indicator data in the process of simulating playing the streaming media resource includes one or more of the following: a status code, a DNS resolution time, a connection time, an initial packet time, an initial buffer time, an initial continuous play time, a buffer time after each stucking, and a continuous play time after each stucking.

The status code refers to a result of playing the streaming media resource, for example, playing successfully or failing to play. The DNS resolution time refers to a period from a moment of starting to execute the task of simulating playing the streaming media resource, to a moment of receiving a result of a domain name resolution. The connection time refers to a period from a moment of ending the DNS resolution to a moment of establishing a connection between the terminal player and the streaming media server successfully. The initial packet time refers to a period from a moment of ending the connection between the terminal player and the streaming media server to a moment of receiving a first data packet. The initial buffer time refers to a period from a moment of ending the initial packet to a moment of starting playing the streaming media resource.

Optionally, the indicator data may further include one or more of the following: a file size, a total download time, a first download file size, a request time, a response time, a total time of executing the task, an average download rate, buffer times, a secure sockets layer (SSL) handshaking time, a play duration, and a buffer size of the streaming media. The request time refers to a period from the start moment of executing the task of simulating playing the streaming media resource to a moment of sending the request information. The response time refers to a period from a moment of sending the request information to a moment of receiving a response signal of the streaming media server.

At step 208, the terminal player sends the indicator data to the monitoring server.

At step 209, the monitoring server receives the indicator data, and determines current quality of streaming media based on the indicator data.

The monitoring server may determine the current quality of streaming media in the fixed period. A length of each fixed period is longer than a length of a period that the terminal player executes a task of playing the streaming media resource. A specific process in which the monitoring server determines the current quality of streaming media based on the indicator data includes: computing, by the monitoring server, a first reference value based on the indicator data, where the first reference value is equal to a ratio of a quantity of playing the streaming media resource by the terminal player successfully in a preset period and a total quantity of playing the streaming media resource by the terminal player in the preset period; and determining that the current quality of streaming media does not meet a requirement if the first reference value is less than a first preset value; or computing a second reference value based on the indicator data if the first reference value is greater than or equal to the first preset value, where the second reference value is equal to a ratio of a quantity of playing the streaming media resource by the terminal player normally in the preset period and the total quantity of playing the streaming media resource by the terminal player in the preset period, and the playing the streaming media resource by the terminal player normally refers to a case in which a preparation time before an initial buffer is less than a first preset time during playing the streaming media resource, or a case in which a sum of the preparation time before the initial buffer and a total buffer time is less than a second preset time during playing the streaming media resource; and determining that the current quality of streaming media meets the requirement if the second reference value is greater than a second preset value; otherwise determining that the current quality of streaming media does not meet the requirement.

The terminal player periodically executes the task of playing the streaming media resource, so that in the preset period, the monitoring server may receive indicator data that is reported by the terminal player in a plurality of play periods, and determine a streaming media play status in each play period based on the reported indicator data. In the process of determining the current quality of streaming media, whether the streaming media is played successfully may be determined through the status code. That the streaming media is successfully played means that the streaming media resource to be played is played for the play duration specified by the task information. The preparation time before the initial buffer is equal to a sum of the DNS resolution time, the connection time, and the initial packet time.

The monitoring server generates alarm information when determining that the current quality of streaming media does not meet a preset requirement, that is, service quality is poor, and sends the alarm information via email, short message service, or WeChat to push the alarm information to relevant personnel, so that the relevant personnel can learn the quality problem of streaming media services in time, and perform optimization processing timely.

After receiving the indicator data, the monitoring server may further draw a time distribution diagram of the key indicator data in a sequence of generating key indicator data. The time distribution diagram is used to show a time occupied by the processing process of each step in a process of executing the task of playing the streaming media resource. The key indicator data includes one or more of the following: a DNS resolution time, a connection time, an initial packet time, an initial buffer time, an initial continuous play time, a buffer time after each stucking, and a continuous play time after each stucking.

Optionally, the terminal player may draw a curve graph of the preparation time before the initial buffer based on the indicator data; or draw a curve graph of the sum of the preparation time before the initial buffer and the total buffer time based on the indicator data. The curve graph uses a time as a horizontal coordinate, and uses the preparation time before the initial buffer for each task of simulating playing the streaming media resource, or the sum of the preparation time before the initial buffer and the total buffer time for each task of simulating playing the streaming media resource as a vertical coordinate, so that the relevant personnel can conveniently pay attention to the changes of the quality of streaming media in real time.

The indicator data reported by the terminal player to the monitoring server may further include one or more of the following: a file size, a total download time, a first download file size, a request time, a response time, a total time of executing the task, an average download rate, buffer times, an SSL handshaking time, a play duration, and a buffer size of the streaming media. The indicator data may be used as reference information for analyzing quality of streaming media.

It should be noted that, for the indicator data reported by the terminal player, the indicator data used to analyze the quality of streaming media, the indicator data shown by the time distribution diagram, and the indicator data shown by the curve graph, corresponding indicator data may be selected as needed, and there is no specific limitation on selecting various pieces of indicator data herein.

During implementation, after analyzing and obtaining the quality of streaming media service, the monitoring server may store an analysis result and an analysis basis, that is, the indicator data, into a database to facilitate future query.

The terminal player further sends an IP address of the streaming media server and an IP address of the DNS server while sending the indicator data to the monitoring server. The streaming media server refers to a server that provides the streaming media resource to the terminal player. The DNS server refers to a server that provides a domain name resolution service to the terminal player. When the streaming media server or the DNS server has a problem based on analysis of the indicator data, fault analysis and fault investigation may be targetedly carried out, thus the efficiency of operation and maintenance could be improved.

To analyze quality of streaming media services serving different operating systems, each piece of task information may match a plurality of terminal players with different operating systems, and the operating system of the terminal player may be a Linux system, a windows system, or an android system. It should be noted that, the terminal player in the embodiment of the present disclosure supports a headless mode to simulate playing the streaming media resource, that is, simulate a process of playing the streaming media resource on a headless machine, so that a server may perform batch distributed detection, without being limited to terminals such as a computer with a screen and a mobile phone.

The terminal player in this embodiment of the present disclosure may detect, by simulating a process that a client plays a streaming media resource, and the problem of streaming media service quality may be found in advance before a customer discovers anomalies such as a stucking, and is fed back to a video source provider and a CDN server in time, to be resolved timely. In addition, the terminal player may record various pieces of indicator data in the process of playing the streaming media resource, and report to the monitoring server, and the monitoring server can uniformly deal with the indicator data reported by each terminal player and analyze reasons for poor quality of streaming media, thus the efficiency of operation and maintenance could be improved.

Based on the same inventive concept as the foregoing method for monitoring quality of streaming media, an embodiment of the present disclosure further provides a system for monitoring quality of streaming media. The system includes a terminal player and a monitoring server.

The terminal player is configured to: simulate playing a streaming media resource in a fixed period, record indicator data for simulating playing the streaming media resource, and send the indicator data to the monitoring server.

The monitoring server is configured to: receive the indicator data, and determine current quality of streaming media based on the indicator data.

For example, the monitoring server is configured to send task information to the terminal player, where the task information includes a network address, a play duration, a buffer size, and a play period of the streaming media resource; and

the terminal player is configured to simulate playing the streaming media resource based on the fixed period after receiving the task information.

For example, the terminal player is configured to:
send, according to the play period, request information of obtaining the streaming media resource, where the request information includes the network address of the streaming media resource;
buffer, after receiving the streaming media resource, the streaming media resource based on the buffer size in the task information, and play the streaming media resource; and
end playing when a duration in which the terminal player plays the streaming media resource reaches the play duration in the task information.

For example, the monitoring server is configured to:
configure monitoring information, where the monitoring information includes the task information, an operating system of a terminal player, and a region of the terminal player;
receive an operating system of the terminal player and a region of the terminal player that are sent by the terminal player which plays the streaming media resource; and
associate the terminal player which plays the streaming media resource with the task information if the terminal player which plays the streaming media resource has the same operating system and the same region with that of the terminal player in the monitoring information.

For example, the terminal player is configured to send task request information to the monitoring server; and
the monitoring server is configured to send task information associated with the terminal player to the terminal player after receiving the task request information.

For example, the terminal player further sends an IP address of a streaming media server and an IP address of a DNS server while sending the indicator data to the monitoring server.

For example, the monitoring server is configured to:
compute a first reference value based on the indicator data, where the first reference value is equal to a ratio of a quantity of playing the streaming media resource by the terminal player successfully in a preset period and a total quantity of playing the streaming media resource by the terminal player in the preset period; and
determine that the current quality of streaming media does not meet a requirement if the first reference value is less than a first preset value.

For example, the monitoring server is configured to:
compute a second reference value based on the indicator data if the first reference value is greater than or equal to the first preset value, where the second reference value is equal to a ratio of a quantity of normal plays in the preset period and the total quantity of plays in the preset period; and
determine that the current quality of streaming media meets the requirement if the second reference value is greater than a second preset value; otherwise, determine that the current quality of streaming media does not meet the requirement.

For example, the monitoring server is further configured to generate alarm information after determining that the current quality of streaming media does not meet the requirement, and send the alarm information via email, short message service, or WeChat.

For example, the monitoring server is configured to:
draw a time distribution diagram of the indicator data in a sequence of generating indicator data.

For example, the monitoring server is configured to:
draw a curve graph of a preparation time before an initial buffer based on the indicator data; or
draw a curve graph of a sum of the preparation time before the initial buffer and a total buffer time based on the indicator data.

The terminal player in this embodiment of the present disclosure may detect, by simulating a process that a client plays a streaming media resource, a quality problem of streaming media services may be found in advance before a customer discovers anomalies such as a stucking, and is fed back to a video source provider and a CDN server in time, to be resolved timely. In addition, the terminal player may record various pieces of indicator data in the process of playing the streaming media resource, and report to the monitoring server, and the monitoring server can uniformly deal with the indicator data reported by each terminal player and analyze reasons for poor quality of streaming media, thus the efficiency of operation and maintenance could be improved.

It should be noted that, the system for monitoring quality of streaming media provided in the foregoing embodiment and the embodiment of the method for monitoring quality of streaming media have the same concept. For a specific implementation process of the system, refer to the method embodiment, and details are not described herein again.

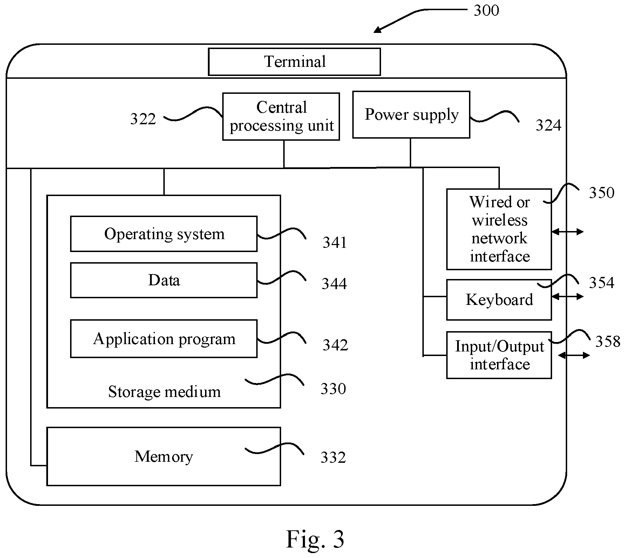

Fig. 3 is a structural block diagram of a terminal according to an embodiment of the present disclosure. The terminal 300 may vary greatly because of different configurations or performance and may include one or more central processing units 322 (for example, one or more processors) and memories 332, and one or more storage medium 330 (for example, one or more massive storage devices) that store application programs 342 or data 344. The memory 332 and the storage medium 330 may be temporary storages or persistent storages. Programs stored in the storage medium 330 may include one or more modules (not shown in the figures), and each module may include a series of instruction operations on a node device. Further, the central processing unit 322 may be configured to: communicate with the storage medium 330 and perform, in the terminal 300, a series of instruction operations stored in the storage medium 330.

The terminal 300 may further include one or more power supplies 324, one or more wired or wireless network interfaces 350, one or more input/output interfaces 358, one or more keyboards 354, and/or, one or more operating systems 341, for example, Windows ServerTM, Mac OS XTM, UnixTM, LinuxTM, and FreeBSDTM.

The terminal 300 may include a memory, and one or more computer programs, where the one or more computer programs are stored in the memory, and the terminal 300 is configured such that the one or more computer programs are executed by one or more processors to implement the processing process performed by the terminal player in the foregoing method for monitoring quality of streaming media:
simulating playing a streaming media resource in a fixed period;
recording indicator data for simulating playing the streaming media resource; and
sending the indicator data to a monitoring server.

A person of ordinary skill in the art may understand that all or some of the steps of the foregoing embodiments may be implemented through hardware, or may be implemented by relevant hardware instructed by a program. The program may be stored in a computer readable storage medium. The storage medium may be a read-only memory, a magnetic disk, or an optical disk.

The foregoing descriptions are merely exemplary embodiments of the present disclosure, but are not intended to limit the present disclosure. The invention is defined by the following claims.

## Claims

1. A method for monitoring quality of streaming media, **characterized by** comprising:
simulating (206), by a terminal player, a client playing a streaming media resource periodically;
recording (207), by the terminal player, indicator data for simulating playing the streaming media resource; wherein the indicator data comprises a status code for determining whether the streaming media is played successfully, and the indicator data further comprises at least one of a DNS resolution time, a connection time, an initial packet time, an initial buffer time, an initial continuous play time, a buffer time after each stucking, and a continuous play time after each stucking;
sending (208), by the terminal player, the indicator data, an IP address of a streaming media server and an IP address of a DNS server to a monitoring server; and
determining (209), by the monitoring server, current quality of streaming media based on the indicator data, the IP address of the streaming media server and the IP address of the DNS server.

2. The method according to claim 1, wherein the step of simulating, by a terminal player, a client playing a streaming media resource periodically comprises:
sending, by the monitoring server, task information to the terminal player, wherein the task information comprises a network address, a play duration, a buffer size, and a play period of the streaming media resource; and
simulating (206), by the terminal player, playing the streaming media resource periodically after receiving the task information;
wherein the streaming media is played successfully refers to that the streaming media resource is played for the play duration specified by the task information.

3. The method according to claim 2, wherein the step of simulating, by a terminal player, playing a streaming media resource periodically comprises:
sending, by the terminal player according to the play period, request information of obtaining the streaming media resource, wherein the request information comprises the network address of the streaming media resource;
buffering, by the terminal player after receiving the streaming media resource, the streaming media resource based on the buffer size indicated by the task information, and playing the streaming media resource; and
ending playing when a duration in which the terminal player plays the streaming media resource reaches the play duration indicated by the task information.

4. The method according to claim 2, wherein the step of ending playing when a duration in which the terminal player plays the streaming media resource reaches the play duration indicated by the task information comprises:
decoding, by the terminal player, a streaming media data packet;
parsing an audio-video time stamp; and
ending playing when the audio-video time stamp reaches the play duration indicated by the task information.

5. The method according to claim 2, wherein before the step of sending, by the monitoring server, task information to the terminal player, the method comprises:
configuring (201), by the monitoring server, monitoring information, wherein the monitoring information comprises the task information, an operating system of a terminal player, and a region of the terminal player;
receiving (202), by the monitoring server, an operating system of the terminal player and a region of the terminal player sent by the terminal player which plays the streaming media resource; and
if the terminal player which plays the streaming media resource has the same operating system and the same region with that of the terminal player in the monitoring information, associating (203) the terminal player which plays the streaming media resource with the task information, thereby matching a suitable terminal player which plays the streaming media resource with the task information.

6. The method according to claim 5, wherein after the step of associating the terminal player which plays the streaming media resource with the task information, the method comprises:
sending (204), by the terminal player, task request information to the monitoring server; and
sending (205), by the monitoring server, task information associated with the terminal player to the terminal player after receiving the task request information.

7. The method according to claim 5, wherein after the step of if the terminal player which plays the streaming media resource has the same operating system and the same region with that of the terminal player in the monitoring information, associate the terminal player which plays the streaming media resource with the task information, the method comprises: preloading, by the monitoring server, the task information matching the terminal player into a memory in a json format.

8. The method according to claim 1, wherein the step of determining, by the monitoring server, current quality of streaming media based on the indicator data comprises:
computing, by the monitoring server, a first reference value based on the indicator data, wherein the first reference value is equal to a ratio of a quantity of playing the streaming media resource by the terminal player successfully in a preset period and a total quantity of playing the streaming media resource by the terminal player in the preset period; and
determining that the current quality of streaming media does not meet a requirement if the first reference value is less than a first preset value.

9. The method according to claim 8, wherein the step of determining, by the monitoring server, current quality of streaming media based on the indicator data further comprises:
computing a second reference value based on the indicator data if the first reference value is greater than or equal to the first preset value, wherein the second reference value is equal to a ratio of a quantity of playing the streaming media resource by the terminal player normally s in the preset period and the total quantity of playing the streaming media resource by the terminal player in the preset period; and
determining that the current quality of streaming media meets requirement if the second reference value is greater than a second preset value; otherwise, determining that the current quality of streaming media does not meet the requirement.

10. The method according to claim 9, wherein after the step of determining, by the monitoring server, that the current quality of streaming media does not meet the requirement, the method comprises:
generating, by the monitoring server, alarm information, and sending the alarm information via email, short message service, or WeChat.

11. The method according to any one of claims 1 to 10, wherein after the receiving, by the monitoring server, the indicator data, the method further comprises:
drawing a time distribution diagram of the indicator data in a sequence of generating indicator data.

12. The method according to any one of claims 1 to 10, wherein after the receiving, by the monitoring server, the indicator data, the method further comprises:
drawing a curve graph of a preparation time before an initial buffer based on the indicator data; or
drawing a curve graph of a sum of a preparation time before an initial buffer and a total buffer time based on the indicator data.

13. A terminal (300), comprising:
at least one processor (322); and
a memory (332) connected and communicated with the at least one processor (322), configured to store instructions executable by the at least one processor (322), wherein
the instructions are executed by the at least one processor (322) to cause the at least one processor (322) to perform the processing process performed by the terminal player in the method for monitoring quality of streaming media according to any one of claims 1 to 12.

14. A computer readable storage medium (330) that stores computer programs, wherein when executed by a processor, the computer programs implement a processing process performed by the terminal player in the method for monitoring quality of streaming media according to any one of claims 1 to 12.

## Patentansprüche

1. Verfahren zum Überwachen einer Qualität von Streamingmedien, das **dadurch gekennzeichnet ist, dass** es Folgendes umfasst:
Simulieren (206) eines Clients, der periodisch eine Streamingmedienressource wiedergibt, durch ein Playerendgerät;
Aufzeichnen (207) von Indikatordaten zum Simulieren des Wiedergebens der Streamingmedienressource durch das Playerendgerät, wobei die Indikatordaten einen Statuscode zum Bestimmen, ob die Streamingmedien erfolgreich wiedergegeben werden, umfassen und die Indikatordaten ferner mindestens eines von einer DNS-Auflösungszeit, einer Verbindungszeit, einer anfänglichen Paketzeit, einer anfänglichen Pufferzeit, einer anfänglichen kontinuierlichen Wiedergabezeit, einer Pufferzeit nach jedem Festhängen und einer kontinuierlichen Wiedergabezeit nach jedem Festhängen umfassen;
Senden (208) der Indikatordaten, einer IP-Adresse eines Streamingmedienservers und einer IP-Adresse eines DNS-Servers durch das Playerendgerät an einen Überwachungsserver; und
Bestimmen (209) einer aktuellen Qualität von Streamingmedien durch den Überwachungsserver auf Basis der Indikatordaten, der IP-Adresse des Streamingmedienservers und der IP-Adresse des DNS-Servers.

2. Verfahren nach Anspruch 1, wobei der Schritt des Simulierens eines Clients, der periodisch eine Streamingmedienressource wiedergibt, durch ein Playerendgerät Folgendes umfasst:
Senden von Aufgabeninformationen durch den Überwachungsserver an das Playerendgerät, wobei die Aufgabeninformationen eine Netzwerkadresse, eine Wiedergabedauer, eine Puffergröße und eine Wiedergabeperiode der Streamingmedienressource umfassen; und
Simulieren (206) des periodischen Wiedergebens der Streamingmedienressource nach Empfangen der Aufgabeninformationen durch das Playerendgerät;
wobei sich das erfolgreiche Wiedergeben der Streamingmedien darauf bezieht, dass die Streamingmedienressource für die von den Aufgabeninformationen spezifizierte Wiedergabedauer wiedergegeben wird.

3. Verfahren nach Anspruch 2, wobei der Schritt des Simulierens des periodischen Wiedergebens einer Streamingmedienressource durch ein Playerendgerät Folgendes umfasst:
Senden von Anforderungsinformationen zum Erhalten der Streamingmedienressource durch das Playerendgerät gemäß der Wiedergabeperiode, wobei die Anforderungsinformationen die Netzwerkadresse der Streamingmedienressource umfassen;
Puffern der Streamingmedienressource auf Basis der durch die Aufgabeninformationen angezeigte Puffergröße und Wiedergeben der Streamingmedienressource durch das Playerendgerät nach Empfangen der Streamingmedienressource; und
Beenden des Wiedergebens, wenn eine Dauer, in der das Playerendgerät die Streamingmedienressource wiedergibt, die durch die Aufgabeninformationen angezeigte Wiedergabedauer erreicht.

4. Verfahren nach Anspruch 2, wobei der Schritt des Beendens des Wiedergebens, wenn eine Dauer, in der das Playerendgerät die Streamingmedienressource wiedergibt, die durch die Aufgabeninformationen angezeigte Wiedergabedauer erreicht, Folgendes umfasst:
Decodieren eines Streamingmediendatenpakets durch das Playerendgerät;
Parsen eines Audio-Video-Zeitstempels; und
Beenden des Wiedergebens, wenn der Audio-Video-Zeitstempel die durch die Aufgabeninformationen angezeigte Wiedergabedauer erreicht.

5. Verfahren nach Anspruch 2, wobei das Verfahren vor dem Schritt des Sendens von Aufgabeninformationen durch den Überwachungsserver an das Playerendgerät Folgendes umfasst:
Auslegen (201) von Überwachungsinformationen durch den Überwachungsserver, wobei die Überwachungsinformationen die Aufgabeninformationen, ein Betriebssystem eines Playerendgeräts und eine Region des Playerendgeräts umfassen;
Empfangen (202) eines Betriebssystems des Playerendgeräts und einer Region des Playerendgeräts, die vom Playerendgerät gesendet werden, der die Streamingmedienressource wiedergibt, durch den Überwachungsserver; und
wenn das Playerendgerät, das die Streamingmedienressource wiedergibt, dasselbe Betriebssystem und dieselbe Region hat wie das Playerendgerät in den Überwachungsinformationen, Verknüpfen (203) des Playerendgeräts, das die Streamingmedienressource wiedergibt, mit den Aufgabeninformationen, dadurch Abgleichen eines geeigneten Playerendgeräts, das die Streamingmedienressource wiedergibt, mit den Aufgabeninformationen.

6. Verfahren nach Anspruch 5, wobei das Verfahren nach dem Schritt des Verknüpfens des Playerendgeräts, das die Streamingmedienressource wiedergibt, mit den Aufgabeninformationen, Folgendes umfasst:
Senden (204) von Aufgabenanforderungsinformationen durch das Playerendgerät an den Überwachungsserver; und
Senden (205) von Aufgabeninformationen, die mit dem Playerendgerät verknüpft sind, durch den Überwachungsserver nach Empfangen der Aufgabenanforderungsinformationen an das Playerendgerät.

7. Verfahren nach Anspruch 5, wobei das Verfahren nach dem Schritt des Verknüpfens des Playerendgeräts, das die Streamingmedienressource wiedergibt, mit den Aufgabeninformationen, wenn das Playerendgerät, das die Streamingmedienressource wiedergibt, dasselbe Betriebssystem und dieselbe Region hat wie das Playerendgerät in den Überwachungsinformationen, Folgendes umfasst: Vorladen der Aufgabeninformationen, die mit dem Playerendgerät übereinstimmen, durch den Überwachungsserver in einem json-Format in einen Speicher.

8. Verfahren nach Anspruch 1, wobei der Schritt des Bestimmens einer aktuellen Qualität von Streamingmedien durch den Überwachungsserver auf Basis der Indikatordaten Folgendes umfasst:
Berechnen eines ersten Referenzwertes durch den Überwachungsserver auf Basis der Indikatordaten, wobei der erste Referenzwert gleich einem Verhältnis einer Menge des erfolgreichen Wiedergebens der Streamingmedienressource durch das Playerendgerät in einer voreingestellten Periode und einer Gesamtmenge des Wiedergebens der Streamingmedienressource durch das Playerendgerät in der voreingestellten Periode ist; und
Bestimmen, dass die aktuelle Qualität der Streamingmedien eine Anforderung nicht erfüllt, wenn der erste Referenzwert kleiner ist als ein erster voreingestellter Wert.

9. Verfahren nach Anspruch 8, wobei der Schritt des Bestimmens einer aktuellen Qualität von Streamingmedien auf Basis der Indikatordaten durch den Überwachungsserver ferner Folgendes umfasst:
Berechnen eines zweiten Referenzwertes auf Basis der Indikatordaten, wenn der erste Referenzwert größer als oder gleich dem ersten voreingestellten Wert ist, wobei der zweite Referenzwert gleich einem Verhältnis einer Menge des normalen Wiedergebens der Streamingmedienressource durch das Playerendgerät in der voreingestellten Periode und der Gesamtmenge des Wiedergebens der Streamingmedienressource durch das Playerendgerät in der voreingestellten Periode ist; und
Bestimmen, dass die aktuelle Qualität von Streamingmedien eine Anforderung erfüllt, wenn der zweite Referenzwert größer ist als ein zweiter voreingestellter Wert; andernfalls Bestimmen, dass die aktuelle Qualität von Streamingmedien die Anforderung nicht erfüllt.

10. Verfahren nach Anspruch 9, wobei das Verfahren nach dem Schritt des Bestimmens durch den Überwachungsserver, dass die aktuelle Qualität von Streamingmedien die Anforderungen nicht erfüllt, Folgendes umfasst:
Erzeugen von Alarminformationen und Senden der Alarminformationen via E-Mail, Kurznachrichtendienst oder WeChat durch den Überwachungsserver.

11. Verfahren nach einem der Ansprüche 1 bis 10, wobei das Verfahren nach dem Empfangen der Indikatordaten durch den Überwachungsserver ferner Folgendes umfasst:
Zeichnen eines Zeitverteilungsdiagramms der Indikatordaten in einer Sequenz des Erzeugens von Indikatordaten.

12. Verfahren nach einem der Ansprüche 1 bis 10, wobei das Verfahren nach dem Empfangen der Indikatordaten durch den Überwachungsserver ferner Folgendes umfasst:
Zeichnen eines Kurvengraphen einer Vorbereitungszeit vor einem anfänglichen Puffer auf Basis der Indikatordaten; oder
Zeichnen eines Kurvengraphen einer Summe einer Vorbereitungszeit vor einem anfänglichen Puffer und einer Gesamtpufferzeit auf Basis der Indikatordaten.

13. Endgerät (300), das Folgendes umfasst:
mindestens einen Prozessor (322); und
einen Speicher (332), der mit dem mindestens einen Prozessor (322) verbunden ist und in Kommunikation steht, der dazu ausgelegt ist, Anweisungen zu speichern, die von dem mindestens einen Prozessor (322) ausführbar sind, wobei
die Anweisungen von dem mindestens einen Prozessor (322) ausgeführt werden, um den mindestens einen Prozessor (322) zu veranlassen, den Verarbeitungsprozess, der vom Playerendgerät im Verfahren zum Überwachen einer Qualität von Streamingmedien nach einem der Ansprüche 1 bis 12 durchgeführt wird, durchzuführen.

14. Computerlesbares Speichermedium (330), auf dem Computerprogramme gespeichert sind, wobei die Computerprogramme, wenn sie von einem Prozessor ausgeführt werden, einen Verarbeitungsprozess implementieren, der vom Playerendgerät im Verfahren zum Überwachen einer Qualität von Streamingmedien nach einem der Ansprüche 1 bis 12 durchgeführt wird.

## Revendications

1. Procédé de surveillance de la qualité d'un contenu multimédia en temps réel, **caractérisé en ce qu'**il comprend les étapes consistant à :
simuler (206), par un lecteur terminal, un client lisant périodiquement une ressource de contenu multimédia en temps réel ;
enregistrer (207), par le lecteur terminal, des données d'indicateur pour simuler la lecture de la ressource de contenu multimédia en temps réel ; dans lequel les données d'indicateur comprennent un code de statut pour déterminer si le contenu multimédia en temps réel est lu avec succès, et les données d'indicateur comprennent en outre au moins l'un parmi un temps de résolution DNS (système des noms de domaines), un temps de connexion, un temps de paquet initial, un temps de mémoire tampon initiale, un temps de lecture en continu initial, un temps de mémoire tampon après chaque blocage, et un temps de lecture en continu après chaque blocage ;
envoyer (208), par le lecteur terminal, les données d'indicateur, une adresse IP (protocole Internet) d'un serveur de contenu multimédia en temps réel, et une adresse IP d'un serveur DNS à un serveur de surveillance ; et
déterminer (209), par le serveur de surveillance, une qualité actuelle d'un contenu multimédia en temps réel sur la base des données d'indicateur, l'adresse IP du serveur de contenu multimédia en temps réel et l'adresse IP du serveur DNS.

2. Procédé selon la revendication 1, dans lequel l'étape consistant à simuler, par un lecteur terminal, un client lisant périodiquement une ressource de contenu multimédia en temps réel comprend les étapes consistant à :
envoyer, par le serveur de surveillance, des informations de tâche au lecteur terminal, dans lequel les informations de tâche comprennent une adresse réseau, une durée de lecture, une taille de mémoire tampon, et une période de lecture de la ressource de contenu multimédia en temps réel ; et
simuler (206), par le lecteur terminal, la lecture périodique de la ressource de contenu multimédia en temps réel après la réception des informations de tâche ;
dans lequel la lecture réussie du contenu multimédia en temps réel fait référence au fait que la ressource de contenu multimédia en temps réel est lue pendant la durée de lecture spécifiée par les informations de tâche.

3. Procédé selon la revendication 2, dans lequel l'étape consistant à simuler, par un lecteur terminal, la lecture périodique d'une ressource de contenu multimédia en temps réel comprend les étapes consistant à :
envoyer, par le lecteur terminal selon la période de lecture, des informations de demande consistant à obtenir la ressource de contenu multimédia en temps réel, dans lequel les informations de demande comprennent l'adresse réseau de la ressource de contenu multimédia en temps réel ;
mettre en mémoire tampon, par le lecteur terminal après la réception de la ressource de contenu multimédia en temps réel, la ressource de contenu multimédia en temps réel sur la base de la taille de mémoire tampon indiquée par les informations de tâche, et lire la ressource de contenu multimédia en temps réel ; et
mettre fin à la lecture lorsqu'une durée pendant laquelle le lecteur terminal lit la ressource de contenu multimédia en temps réel atteint la durée de lecture indiquée par les informations de tâche.

4. Procédé selon la revendication 2, dans lequel l'étape consistant à mettre fin à la lecture lorsqu'une durée pendant laquelle le lecteur terminal lit la ressource de contenu multimédia en temps réel atteint la durée de lecture indiquée par les informations de tâche comprend les étapes consistant à :
décoder, par le lecteur terminal, un paquet de données de contenu multimédia en temps réel ;
effectuer une analyse syntaxique d'un horodateur audio-vidéo ; et
mettre fin à la lecture lorsque l'horodateur audio-vidéo atteint la durée de lecture indiquée par les informations de tâche.

5. Procédé selon la revendication 2, dans lequel avant l'étape consistant à envoyer, par le serveur de surveillance, des informations de tâche au lecteur terminal, le procédé comprend les étapes consistant à :
configurer (201), par le serveur de surveillance, des informations de surveillance, dans lequel les informations de surveillance comprennent les informations de tâche, un système d'exploitation d'un lecteur terminal, et une région du lecteur terminal ;
recevoir (202), par le serveur de surveillance, un système d'exploitation du lecteur terminal et une région du lecteur terminal envoyés par le lecteur terminal qui lit la ressource de contenu multimédia en temps réel ; et
si le lecteur terminal qui lit la ressource de contenu multimédia en temps réel a le même système d'exploitation et la même région que ceux du lecteur terminal dans les informations de surveillance, associer (203) le lecteur terminal qui lit la ressource de contenu multimédia en temps réel aux informations de tâche, faisant ainsi correspondre un lecteur terminal approprié qui lit la ressource de contenu multimédia en temps réel aux informations de tâche.

6. Procédé selon la revendication 5, dans lequel après l'étape consistant à associer le lecteur terminal qui lit la ressource de contenu multimédia en temps réel aux informations de tâche, le procédé comprend les étapes consistant à :
envoyer (204), par le lecteur terminal, des informations de demande de tâche au serveur de surveillance ; et
envoyer (205), par le serveur de surveillance, des informations de tâche associées au lecteur terminal au lecteur terminal après la réception des informations de demande de tâche.

7. Procédé selon la revendication 5, dans lequel après l'étape consistant à associer le lecteur terminal qui lit la ressource de contenu multimédia en temps réel aux informations de tâche, si le lecteur terminal qui lit la ressource de contenu multimédia en temps réel a le même système d'exploitation et la même région que ceux du lecteur terminal dans les informations de surveillance, le procédé comprend l'étape consistant à : charger préalablement, par le serveur de surveillance, les informations de tâche correspondant au lecteur terminal en une mémoire dans un format JSON.

8. Procédé selon la revendication 1, dans lequel l'étape consistant à déterminer, par le serveur de surveillance, une qualité actuelle d'un contenu multimédia en temps réel sur la base des données d'indicateur comprend les étapes consistant à :
calculer, par le serveur de surveillance, une première valeur de référence sur la base des données d'indicateur, dans lequel la première valeur de référence est égale à un rapport d'une quantité de la lecture réussie de la ressource de contenu multimédia en temps réel par le lecteur terminal dans une période prédéfinie et d'une quantité totale de la lecture de la ressource de contenu multimédia en temps réel par le lecteur terminal dans la période prédéfinie ; et
déterminer que la qualité actuelle d'un contenu multimédia en temps réel ne répond pas à une exigence si la première valeur de référence est inférieure à une première valeur prédéfinie.

9. Procédé selon la revendication 8, dans lequel l'étape consistant à déterminer, par le serveur de surveillance, une qualité actuelle d'un contenu multimédia en temps réel sur la base des données d'indicateur comprend en outre les étapes consistant à :
calculer une deuxième valeur de référence sur la base des données d'indicateur si la première valeur de référence est supérieure ou égale à la première valeur prédéfinie, dans lequel la deuxième valeur de référence est égale à un rapport d'une quantité de la lecture normale de la ressource de contenu multimédia en temps réel par le lecteur terminal dans la période prédéfinie et de la quantité totale de la lecture de la ressource de contenu multimédia en temps réel par le lecteur terminal dans la période prédéfinie ; et
déterminer que la qualité actuelle d'un contenu multimédia en temps réel répond à une exigence si la deuxième valeur de référence est supérieure à une deuxième valeur prédéfinie ; sinon, déterminer que la qualité actuelle d'un contenu multimédia en temps réel ne répond pas à l'exigence.

10. Procédé selon la revendication 9, dans lequel après l'étape consistant à déterminer, par le serveur de surveillance, que la qualité actuelle d'un contenu multimédia en temps réel ne répond pas à l'exigence, le procédé comprend l'étape consistant à :
générer, par le serveur de surveillance, des informations d'alarme, et envoyer les informations d'alarme par courrier électronique, service de messages courts ou WeChat.

11. Procédé selon l'une quelconque des revendications 1 à 10, dans lequel après la réception par le serveur de surveillance des données d'indicateur, le procédé comprend en outre l'étape consistant à :
tracer un diagramme de distribution temporelle des données d'indicateur dans une séquence de génération de données d'indicateur.

12. Procédé selon l'une quelconque des revendications 1 à 10, dans lequel, après la réception, par le serveur de surveillance, des données d'indicateur, le procédé comprend en outre les étapes consistant à :
tracer un graphique en courbe d'un temps de préparation avant une mémoire tampon initiale sur la base des données d'indicateur ; ou
tracer un graphique en courbe d'une somme d'un temps de préparation avant une mémoire tampon initiale et d'un temps de mémoire tampon total sur la base des données d'indicateur.

13. Terminal (300), comprenant :
au moins un processeur (322) ; et
une mémoire (332) connectée au au moins un processeur (322) et communiquant avec celui-ci, configurée pour stocker des instructions exécutables par le au moins un processeur (322), dans lequel
les instructions sont exécutées par le au moins un processeur (322) pour amener le au moins un processeur (322) à réaliser le processus de traitement réalisé par le lecteur terminal dans le procédé de surveillance de la qualité d'un contenu multimédia en temps réel selon l'une quelconque des revendications 1 à 12.

14. Support de stockage lisible par ordinateur (330) qui stocke des programmes informatiques, dans lequel, lorsqu'ils sont exécutés par un processeur, les programmes informatiques mettent en œuvre un processus de traitement réalisé par le lecteur terminal dans le procédé de surveillance de la qualité d'un contenu multimédia en temps réel selon l'une quelconque des revendications 1 à 12.
